# EUROPÄISCHE PATENTSCHRIFT

(11) **EP 4 595 184 B1**
(45) Veröffentlichungstag und Bekanntmachung des Hinweises auf die Patenterteilung: **04.11.2026**
(21) Anmeldenummer: 23782846.2
(22) Anmeldetag: 27.09.2023
(51) Int. Cl.: H02J 3/46, H02J 3/38

(54) **VERFAHREN ZUM BETREIBEN EINES LEISTUNGSBEREITSTELLUNGSNETZWERKS, STEUERVORRICHTUNG ZUM BETREIBEN EINES LEISTUNGSBEREITSTELLUNGSNETZWERKS UND LEISTUNGSBEREITSTELLUNGSNETZWERK MIT EINER SOLCHEN STEUERVORRICHTUNG**
METHOD FOR OPERATING A POWER DELIVERY NETWORK, CONTROL DEVICE FOR OPERATING A POWER DELIVERY NETWORK, AND POWER DELIVERY NETWORK COMPRISING SUCH A CONTROL DEVICE
PROCÉDÉ PERMETTANT DE FAIRE FONCTIONNER UN RÉSEAU DE FOURNITURE DE PUISSANCE, DISPOSITIF DE COMMANDE POUR FAIRE FONCTIONNER UN RÉSEAU DE FOURNITURE DE PUISSANCE ET RÉSEAU DE FOURNITURE DE PUISSANCE DOTÉ D'UN TEL DISPOSITIF DE COMMANDE

(30) Priorität: 29.09.2022 DE 102022125233
(43) Veröffentlichungstag der Anmeldung: 06.08.2025
(73) Patentinhaber: Rolls-Royce Solutions GmbH, 88045 Friedrichshafen (DE)
(72) Erfinder: BERNHARD, Alexander, 88074 Meckenbeuren (DE); SCHÄFER, Carsten, 88212 Ravensburg (DE); BEERMANN, Dennis, 78467 Konstanz (DE)
(74) Vertreter: Gleiss Große Schrell und Partner mbB
(86) Internationale Anmeldenummer: PCT/EP2023/076762
(87) Internationale Veröffentlichungsnummer: WO 2024/068763

(56) Entgegenhaltungen:
- DE-A1- 102013 222 277
- US-A1- 2022 247 188

## Beschreibung

Die Erfindung betrifft ein Verfahren zum Betreiben eines Leistungsbereitstellungsnetzwerks, eine Steuervorrichtung zur Durchführung eines solchen Verfahrens und ein Leistungsbereitstellungsnetzwerk mit einer solchen Steuervorrichtung.

Ein derartiges Leistungsbereitstellungsnetzwerk kann mindestens eine erste Leistungsbereitstellungsvorrichtung und eine Leistungsbereitstellungsgruppe von zweiten Leistungsbereitstellungsvorrichtungen aufweisen (DE 10 2013 222 277 A1;
US 2022/0247188 A1). Eine Lastanforderung an das Leistungsbereitstellungsnetzwerk möglichst kostenoptimal, das heißt mit möglichst geringen Kosten, und/oder mit möglichst hoher Versorgungssicherheit auf die mindestens eine erste Leistungsbereitstellungsvorrichtung einerseits und die Leistungsbereitstellungsgruppe andererseits zu verteilen, sowie weiterhin den auf die Leistungsbereitstellungsgruppe entfallenden Lastanteil auf die zweiten Leistungsbereitstellungsvorrichtungen innerhalb der Leistungsbereitstellungsgruppe zu verteilen, kann als mathematisches Optimierungsproblem formuliert werden. Je nach konkreter physikalischer Ausgestaltung der mindestens einen ersten Leistungsbereitstellungsvorrichtung sowie der zweiten Leistungsbereitstellungsvorrichtungen müssen allerdings verschiedene mathematische Modelle zugrunde gelegt werden, beispielsweise lineare Modelle, nichtlineare Modelle, neuronale Netze, oder andere Modelle. Ist eine Leistungsbereitstellungsvorrichtung an- und abschaltbar, müssen binäre Variablen verwendet werden, die keine Zwischenwerte annehmen können. Demgegenüber können erneuerbare Energiequellen wie beispielsweise Photovoltaik oder Wind nicht an- oder abgeschaltet werden, sondern liefern vielmehr Energie in Abhängigkeit von nicht steuerbaren Parametern. Dies führt zu dem Problem, dass eine Optimierung des Betriebs eines solchen Leistungsbereitstellungsnetzwerks durch ein übergeordnetes mathematisches Konstrukt suboptimal sein kann, insbesondere mit Blick auf eine Qualität der Optimierung, eine Skalierbarkeit des Leistungsbereitstellungsnetzwerks, eine Rechenzeit sowie eine Wartbarkeit einer die Optimierung durchführenden Software.

Der Erfindung liegt die Aufgabe zugrunde, ein Verfahren zum Betreiben eines Leistungsbereitstellungsnetzwerks, eine Steuervorrichtung zur Durchführung eines solchen Verfahrens und ein Leistungsbereitstellungsnetzwerk mit einer solchen Steuervorrichtung zu schaffen, wobei die genannten Nachteile zumindest reduziert, vorzugsweise vermieden sind.

Die Erfindung bezieht sich auf ein Verfahren zum Betreiben eines Leistungsbereitstellungsnetzwerks gemäß Anspruch 1 und einer entsprechenden Steuereinrichtung zum Betreiben eines Leistungsbereitstellungsnetzwerks gemäß Anspruch 6. Weitere Ausführungsformen sind in den abhängigen Ansprüchen definiert.

Die Aufgabe wird insbesondere gelöst, indem ein Verfahren zum Betreiben eines Leistungsbereitstellungsnetzwerks, das mindestens eine erste Leistungsbereitstellungsvorrichtung und - mindestens - eine Leistungsbereitstellungsgruppe von zweiten Leistungsbereitstellungsvorrichtungen aufweist, geschaffen wird, wobei eine Lastanforderung an das Leistungsbereitstellungsnetzwerk erfasst wird. Von der mindestens einen ersten Leistungsbereitstellungsvorrichtung wird eine erste Leistungsbereitstellungsinformation erfasst, und von der Leistungsbereitstellungsgruppe wird eine zweite Leistungsbereitstellungsinformation erfasst. Auf der Grundlage der Lastanforderung, der ersten Leistungsbereitstellungsinformation und der zweiten Leistungsbereitstellungsinformation wird - insbesondere in einem hierarchisch übergeordneten Schritt - mittels nichtlinearer Optimierung eine erste Lastverteilung bestimmt, die eine erste Teillast für die mindestens eine erste Leistungsbereitstellungsvorrichtung und eine zweite Teillast für die Leistungsbereitstellungsgruppe umfasst. Mittels gemischt-ganzzahliger linearer Optimierung wird - insbesondere in einem hierarchisch untergeordneten Schritt - eine zweite Lastverteilung bestimmt, durch die die zweite Teillast auf die zweiten Leistungsbereitstellungsvorrichtungen der Leistungsbereitstellungsgruppe aufgeteilt oder verteilt wird. Das Leistungsbereitstellungsnetzwerk wird mit der ersten Lastverteilung betrieben, und die Leistungsbereitstellungsgruppe wird mit der zweiten Lastverteilung betrieben. Vorteilhaft kann auf diese Weise das globale Optimierungsproblem aufgeteilt werden in zwei hierarchisch gegliederte Optimierungsprobleme, wobei ein erstes übergeordnetes Optimierungsproblem die Lastverteilung zwischen der mindestens einen ersten Leistungsbereitstellungsvorrichtung und der Leistungsbereitstellungsgruppe betrifft, und wobei ein zweites, untergeordnetes Optimierungsproblem die - gleichsam sekundäre - Lastverteilung der auf die Leistungsbereitstellungsgruppe entfallenden Last, das heißt die zweite Teillast, auf die zweiten Leistungsbereitstellungsvorrichtungen innerhalb der Leistungsbereitstellungsgruppe betrifft. Die beiden hierarchisch gegliederten Optimierungsprobleme können mit verschiedenen, jeweils insbesondere an die physikalischen Ausgestaltungen der verschiedenen Leistungsbereitstellungsvorrichtungen angepassten mathematischen Methoden gelöst werden, nämlich insbesondere das erste übergeordnete Optimierungsproblem mittels nichtlinearer Optimierung und das zweite, untergeordnete Optimierungsproblem mittels gemischt-ganzzahliger linearer Optimierung. Auf diese Weise wird vorteilhaft die Qualität der Optimierung gesteigert, die Optimierung ist in einfacher Weise skalierbar, die Rechenzeit ist vorteilhaft gering, und die für die Optimierung vorgesehene Software ist insbesondere aufgrund der modularen Struktur gut und einfach zu warten.

In einer Ausführungsform weist das Leistungsbereitstellungsnetzwerk eine Mehrzahl an Leistungsbereitstellungsgruppen auf. Jede Leistungsbereitstellungsgruppe weist ihrerseits eine Mehrzahl an zweiten Leistungsbereitstellungsvorrichtungen auf.

In einer Ausführungsform wird die Lastanforderung an das Leistungsbereitstellungsnetzwerk durch das Leistungsbereitstellungsnetzwerk, insbesondere durch dessen Steuervorrichtung, insbesondere durch ein erstes Steuermodul, selbst ermittelt. In einer anderen Ausführungsform wird die Lastanforderung durch das Leistungsbereitstellungsnetzwerk, insbesondere durch dessen Steuervorrichtung, insbesondere durch ein erstes Steuermodul, empfangen, insbesondere von einer mit dem Leistungsbereitstellungsnetzwerk wirkverbundenen und durch das Leistungsbereitstellungsnetzwerk mit Leistung versorgten Lastvorrichtung, oder von einem Betreiber des Leistungsbereitstellungsnetzwerks oder der Lastvorrichtung.

Unter einer Leistungsbereitstellungsinformation wird im Kontext der vorliegenden technischen Lehre insbesondere eine Information oder eine Mehrzahl an Informationen oder Daten verstanden, die die Bereitstellung von Leistung durch eine Leistungsbereitstellungsvorrichtung oder eine Mehrzahl an Leistungsbereitstellungsvorrichtungen betrifft. Eine solche Leistungsbereitstellungsinformation kann insbesondere ausgewählt sein aus einer Gruppe, bestehend aus: Einer minimal bereitstellbaren Leistung, einer maximal bereitstellbaren Leistung, einem Mittelwert oder Erwartungswert einer bereitstellbaren Leistung, einer aktuell verfügbaren Leistung, einem aktuell zur Verfügung stehenden Leistungsgradient, mit Blick auf die Leistungsbereitstellung bestehende Beschränkungen, einer Kosteninformation zu in Zusammenhang mit der bereitstellbaren Leistung entstehenden Kosten, einem An- oder Abschaltzustand einer Leistungsbereitstellungsvorrichtung, einer Zeitdauer seit dem letzten An- oder Ausschaltvorgang einer Leistungsbereitstellungsvorrichtung, und einer Verfügbarkeit einer Leistungsbereitstellungsvorrichtung. Insbesondere kann mittels einer Berücksichtigung der Zeitdauer seit dem letzten An- oder Ausschaltvorgang der Leistungsbereitstellungsvorrichtungen eine Vergleichmäßigung der Betriebszeiten und damit zugleich der Alterung und des Verschleißes der einzelnen Leistungsbereitstellungsvorrichtungen angestrebt werden. Insbesondere kann die Leistungsbereitstellungsinformation von der Zeit abhängen und sich insbesondere - insbesondere ausgehend von einem momentanen Zeitpunkt - auf einen Prognosezeitraum beziehen. Insbesondere in diesem Fall ist es vorteilhaft möglich, eine Lastverteilung für die Zukunft, insbesondere ausgehend von dem momentanen Zeitpunkt über den Prognosezeitraum, zu berechnen.

Unter in Zusammenhang mit der bereitstellbaren Leistung entstehenden Kosten wird im Kontext der vorliegenden technischen Lehre insbesondere mindestens ein Kostenbeitrag verstanden, der ausgewählt ist aus Betriebskosten, insbesondere einschließlich von Kosten in Zusammenhang mit Emissionen, und Wartungskosten einer Leistungsbereitstellungsvorrichtung oder der Leistungsbereitstellungsgruppe. In einer Ausführungsform werden als Kosten Betriebskosten und Wartungskosten, insbesondere die Summe aus Betriebskosten und Wartungskosten, verwendet.

Insbesondere kann die erste Leistungsbereitstellungsinformation eine Mehrzahl an Informationen oder Daten umfassen, insbesondere kann sie als Informationsvektor ausgebildet sein. Insbesondere kann die erste Leistungsbereitstellungsinformation eine aktuell verfügbare, beispielsweise vom Wetter abhängige, Leistung umfassen, und/oder eine minimal bereitstellbare Leistung, eine maximal bereitstellbare Leistung, einen Mittelwert oder Erwartungswert einer bereitstellbaren Leistung, eine aktuell verfügbare Leistung, mit Blick auf die Leistungsbereitstellung bestehende Beschränkungen, und/oder eine Verfügbarkeit der mindestens einen ersten Leistungsbereitstellungsvorrichtung. Insbesondere kann die erste Leistungsbereitstellungsinformation zeitabhängig gegeben sein, insbesondere bezogen auf den Prognosezeitraum.

Insbesondere kann die zweite Leistungsbereitstellungsinformation eine Mehrzahl an Informationen oder Daten umfassen, insbesondere kann sie als Informationsvektor ausgebildet sein. Insbesondere kann die zweite Leistungsbereitstellungsinformation eine aktuell verfügbare Leistung und/oder einen aktuell zur Verfügung stehenden Leistungsgradient umfassen, sowie alternativ oder zusätzlich in Zusammenhang mit der Leistungsbereitstellung entstehende Kosten und/oder mit Blick auf die Leistungsbereitstellung bestehende Beschränkungen. Insbesondere kann die zweite Leistungsbereitstellungsinformation zeitabhängig gegeben sein, insbesondere bezogen auf den Prognosezeitraum.

Insbesondere wird die Lastanforderung - insbesondere vollständig - aufgeteilt auf die erste Teillast und die zweite Teillast.

Gemäß einer Weiterbildung der Erfindung ist vorgesehen, dass die erste Lastverteilung bestimmt wird, indem mittels der nichtlinearen Optimierung eine auf der Grundlage der ersten und zweiten Leistungsbereitstellungsinformationen ermittelte erste Kostenfunktion, auch als Gesamtkostenfunktion bezeichnet, - optional unter Randbedingungen - optimiert wird. Insbesondere auf diese Weise kann vorteilhaft eine zumindest näherungsweise kostenoptimale, vorzugsweise kostenoptimale Aufteilung der Last einerseits auf die mindestens eine erste Leistungsbereitstellungsvorrichtung und andererseits auf die Leistungsbereitstellungsgruppe erfolgen.

Insbesondere erfolgt die Bestimmung der ersten Lastverteilung zeitabhängig, insbesondere bezogen auf den Prognosezeitraum.

Gemäß einer Weiterbildung der Erfindung ist vorgesehen, dass für die zweiten Leistungsbereitstellungsvorrichtungen der Leistungsbereitstellungsgruppe jeweils eine dritte Leistungsbereitstellungsinformation erfasst wird, wobei auf der Grundlage der dritten Leistungsbereitstellungsinformationen eine zweite Kostenfunktion, auch als Teil-Kostenfunktion bezeichnet, ermittelt wird, und wobei die zweite Lastverteilung bestimmt wird, indem die zweite Kostenfunktion mittels der gemischt-ganzzahligen linearen Optimierung - optional unter Randbedingungen - optimiert wird. Insbesondere auf diese Weise kann vorteilhaft eine zumindest näherungsweise kostenoptimale, vorzugsweise kostenoptimale Aufteilung des insbesondere gemäß der ersten Lastverteilung auf die Leistungsbereitstellungsgruppe entfallenden Lastanteils, das heißt der zweiten Teillast, auf die zweiten Leistungsbereitstellungsvorrichtungen erfolgen.

Insbesondere erfolgt die Bestimmung der zweiten Lastverteilung zeitabhängig, insbesondere bezogen auf den Prognosezeitraum.

Mittels der Randbedingungen können insbesondere Aspekte der Versorgungssicherheit der Leistungsversorgung durch das Leistungsbereitstellungsnetzwerk berücksichtigt werden. Insbesondere können die Randbedingungen beispielsweise in Abhängigkeit einer Systemrelevanz der mit Leistung zu versorgenden Lastvorrichtung verschieden gewählt werden.

Insbesondere können die dritten Leistungsbereitstellungsinformationen jeweils eine Mehrzahl an Informationen oder Daten umfassen, insbesondere können sie als Informationsvektoren ausgebildet sein. Insbesondere kann eine jeweilige dritte Leistungsbereitstellungsinformation eine aktuell verfügbare Leistung und/oder einen aktuell zur Verfügung stehenden Leistungsgradient einer zugeordneten zweiten Leistungsbereitstellungsvorrichtung umfassen, sowie alternativ oder zusätzlich in Zusammenhang mit der Leistungsbereitstellung durch die zugeordnete zweite Leistungsbereitstellungsvorrichtung entstehende Kosten und/oder mit Blick auf die zugeordnete zweite Leistungsbereitstellungsvorrichtung bestehende Beschränkungen. Insbesondere kann die jeweilige dritte Leistungsbereitstellungsinformation auch die Information umfassen, ob die zugeordnete zweite Leistungsbereitstellungsvorrichtung momentan angeschaltet oder abgeschaltet ist, und/oder oder ob sie momentan angeschaltet oder abgeschaltet werden kann, beispielsweise wegen Wartung oder aus thermischen Gründen. Insbesondere können die dritten Leistungsbereitstellungsinformationen zeitabhängig gegeben sein, insbesondere bezogen auf den Prognosezeitraum.

In einer Ausführungsform wird eine gegebenenfalls insbesondere von den dritten Leistungsbereitstellungsinformationen umfasste Information darüber, welche zweiten Leistungsbereitstellungsvorrichtungen momentan angeschaltet oder abgeschaltet sind, zumindest nicht unmittelbar, insbesondere nicht in die Ermittlung der ersten Lastverteilung einbezogen.

Insbesondere werden die dritten Leistungsbereitstellungsinformationen nicht in die hierarchisch übergeordnete Ermittlung der ersten Lastverteilung einbezogen. Insoweit wird folgerichtig vorteilhaft eine vollständige hierarchische Trennung zwischen der übergeordneten nichtlinearen Optimierung und der untergeordneten gemischt-ganzzahligen Optimierung umgesetzt.

Gemäß einer Weiterbildung der Erfindung ist vorgesehen, dass die zweite Leistungsbereitstellungsinformation auf der Grundlage der dritten Leistungsbereitstellungsinformationen ermittelt wird, insbesondere als eine Information über die Leistungsbereitstellungsgruppe, die sich aus der Gesamtheit der zu den einzelnen zweiten Leistungsbereitstellungsvorrichtungen ermittelten dritten Leistungsbereitstellungsinformationen ergibt.

Gemäß einer Weiterbildung der Erfindung ist vorgesehen, dass als die zweiten Leistungsbereitstellungsvorrichtungen solche Leistungsbereitstellungsvorrichtungen verwendet werden, die durch das Leistungsbereitstellungsnetzwerk frei steuerbar sind, wobei als die mindestens eine erste Leistungsbereitstellungsvorrichtung eine Leistungsbereitstellungsvorrichtung verwendet wird, deren momentane maximale Leistung von mindestens einer durch das Leistungsbereitstellungsnetzwerk nicht beeinflussbaren Bedingung abhängt. Dabei wird im Kontext der vorliegenden technischen Lehre unter einer momentanen maximalen Leistung diejenige Leistung verstanden, die durch die erste Leistungsbereitstellungsvorrichtung zu einem bestimmten Zeitpunkt insbesondere aufgrund von zu dem bestimmten Zeitpunkt vorliegenden, nicht oder nur wenig steuerbaren Umständen, maximal erbracht werden kann. Die momentane maximale Leistung ist somit insbesondere nicht die Nennleistung der ersten Leistungsbereitstellungsvorrichtung, sondern weicht insbesondere - abhängig von den vorliegenden Umständen - zeitlich fluktuierend von der Nennleistung ab oder schwankt um die Nennleistung.

Insbesondere können als die zweiten Leistungsbereitstellungsvorrichtungen Kombinationen aus jeweils einer Brennkraftmaschine und einer mit der Brennkraftmaschine antriebswirkverbundenen elektrischen Maschine verwendet werden, wobei eine derartige Kombination auch als Generatorsatz oder Genset bezeichnet wird.

Die mindestens eine erste Leistungsbereitstellungsvorrichtung ist vorzugsweise ausgewählt aus einer Gruppe, bestehend aus: Einer Windkraftanlage, einer Photovoltaikanlage, und einem elektrischen Energiespeicher, insbesondere einer Batterie oder einem Kondensator. Insbesondere kann damit der Betrieb der mindestens einen ersten Leistungsbereitstellungsvorrichtung vom Wetter als einer nicht durch das Leistungsbereitstellungsnetzwerk beeinflussbaren Bedingung oder vom Ladungszustand (State of Charge - SOC) des Energiespeichers als einer gegebenenfalls nur wenig steuerbaren Bedingung abhängen.

Bei der Berechnung der Lastverteilungen ist insbesondere zu berücksichtigen, dass nur eine angeschaltete zweite Leistungsbereitstellungsvorrichtung, beispielsweise ein Genset, ihre maximale Leistung oder Nennleistung - gegebenenfalls unter Berücksichtigung eines begrenzten zeitlichen Leistungsgradienten - liefern kann. Eine abgeschaltete zweite Leistungsbereitstellungsvorrichtung muss demgegenüber erst noch gestartet werden und kann erst nach einer Synchronisierungszeit Leistung in das Leistungsbereitstellungsnetzwerk einspeisen. Insbesondere unter diesen Bedingungen ergeben sich die in Abhängigkeit der Zeit darstellbaren Leistungsbeiträge der Leistungsbereitstellungsgruppe.

Mit Blick auf die Kosten in Zusammenhang mit der Leistungsbereitstellung durch die Leistungsbereitstellungsgruppe ist insbesondere folgendes zu beachten: Die Kosten der gesamten Leistungsbereitstellungsgruppe ergeben sich aus den Kosten der einzelnen zweiten Leistungsbereitstellungsvorrichtungen, die voneinander verschieden - beispielsweise mit verschiedenen Nennleistungen - ausgelegt sein können, wobei sich auch die zugeordneten leistungsspezifischen Kosten unterscheiden können. Für eine bestimmte angeforderte Gesamtleistung der Leistungsbereitstellungsgruppe können sich verschiedene Möglichkeiten ergeben, diese mithilfe der verschiedenen zweiten Leistungsbereitstellungsvorrichtungen aufzubringen, das heißt die Gesamtleistung kann in verschiedenen Weisen auf die verschiedenen zweiten Leistungsbereitstellungsvorrichtungen verteilt werden. Es ergeben sich also insbesondere verschiedene Möglichkeiten für die zweite Leistungsverteilung. Damit verbunden sind insbesondere auch jeweils verschiedene Kosten für die Erbringung der Gesamtleistung. In einer Ausführungsform wird allerdings stets nur eine der Leistungsbereitstellungsgruppe zugeordnete zeitabhängige Kosteninformation zur Ermittlung der ersten Lastverteilung herangezogen. Insoweit ist dann vorab festzulegen - insbesondere durch den Betreiber - ob unter Beachtung der verschiedenen möglichen zweiten Lastverteilungen die maximalen Kosten, die minimalen Kosten oder mittlere Kosten für die Leistungsbereitstellungsgruppe berücksichtigt werden sollen.

Werden die maximalen Kosten der Leistungsbereitstellungsgruppe zur Ermittlung der ersten Lastverteilung herangezogen, hat dies insbesondere zur Folge, dass der Leistungsbereitstellungsgruppe ein geringerer Lastanteil zugewiesen wird, als wenn die minimalen Kosten oder mittlere Kosten herangezogen würden. Vorteilhaft ist dabei, dass die tatsächlich entstehenden Kosten geringer sein können als die prognostizierten Kosten, wobei aber zu berücksichtigen ist, dass der entsprechend höhere Lastanteil, der der mindestens einen ersten Leistungsbereitstellungsvorrichtung zugewiesen wird, gegebenenfalls mit geringerer Zuverlässigkeit erbracht werden kann. Somit ist die Leistungsversorgung unsicherer, als wenn die minimalen Kosten oder mittlere Kosten herangezogen werden.

Werden die minimalen Kosten der Leistungsbereitstellungsgruppe zur Ermittlung der ersten Lastverteilung herangezogen, hat dies zur Folge, dass der Leistungsbereitstellungsgruppe ein höherer Lastanteil zugewiesen wird, als wenn die maximalen Kosten oder mittlere Kosten herangezogen würden. Vorteilhaft dabei ist, dass dieser höhere Lastanteil mit besonders großer Zuverlässigkeit erbracht werden kann, sodass die Leistungsversorgung besonders sicher ist. Allerdings können die tatsächlich entstehenden Kosten höher sein als die prognostizierten Kosten.

Werden mittlere Kosten der Leistungsbereitstellungsgruppe zur Ermittlung der ersten Lastverteilung herangezogen, ergibt sich insbesondere ein mittleres oder ausgewogenes Szenario zwischen den beiden zuvor beschriebenen - extremen - Szenarien. Insbesondere können die tatsächlich entstehenden Kosten sowohl höher als auch niedriger sein als die prognostizierten Kosten.

Die Entscheidung, ob die maximalen, die minimalen oder mittlere Kosten für die Leistungsbereitstellungsgruppe herangezogen werden, kann insbesondere abhängig von einer Applikation des Leistungsbereitstellungsnetzwerks erfolgen, insbesondere abhängig von einer Ausgestaltung der zu versorgenden Lastvorrichtung, insbesondere in Abhängigkeit von deren Systemrelevanz oder von den mit einer unzureichend erfüllten Lastanforderung verbundenen Risiken. Dabei können insbesondere wirtschaftliche Aspekte und Sicherheitsaspekte bezüglich der Leistungserbringung gegeneinander - auch zeitlich variierend - abgewogen werden. Die entsprechende Entscheidung oder Abwägung wird dann insbesondere durch die im Rahmen der Ermittlung der Lastverteilungen zu berücksichtigenden Randbedingungen umgesetzt.

In einer Ausführungsform wird die erste Lastverteilung unter Optimierung, insbesondere Minimierung, einer Gesamtkostenfunktion - optional unter Randbedingungen - ermittelt, in welche die Kostenbeiträge der mindestens einen ersten Leistungsbereitstellungsvorrichtung und der Leistungsbereitstellungsgruppe jeweils mit die erste Lastverteilung definierenden ersten Anteilsfaktoren eingehen. Zur Optimierung, insbesondere Minimierung der Gesamtkostenfunktion werden insbesondere die ersten Anteilsfaktoren variiert, wobei die im Optimum, insbesondere Minimum der Gesamtkostenfunktion aufgefundenen ersten Anteilsfaktoren die erste Lastverteilung festlegen.

Alternativ oder zusätzlich wird die zweite Lastverteilung unter Optimierung, insbesondere Minimierung, einer Teil-Kostenfunktion - optional unter Randbedingungen - ermittelt, in welche die Kostenbeiträge der zweiten Leistungsbereitstellungsvorrichtungen der Leistungsbereitstellungsgruppe jeweils mit die zweite Lastverteilung definierenden zweiten Anteilsfaktoren eingehen. Zur Optimierung, insbesondere Minimierung der Teil-Kostenfunktion werden insbesondere die zweiten Anteilsfaktoren variiert, wobei die im Optimum, insbesondere Minimum der Teil-Kostenfunktion aufgefundenen zweiten Anteilsfaktoren die zweite Lastverteilung festlegen.

Die Randbedingungen können dabei - wie ausgeführt - insbesondere die Sicherheit oder Zuverlässigkeit der Leistungserbringung berücksichtigen.

Die Aufgabe wird auch gelöst, indem eine Steuervorrichtung zum Betreiben eines Leistungsbereitstellungsnetzwerks, das mindestens eine erste Leistungsbereitstellungsvorrichtung und eine Leistungsbereitstellungsgruppe von zweiten Leistungsbereitstellungsvorrichtungen aufweist, geschaffen wird, wobei die Steuervorrichtung ein - hierarchisch übergeordnetes - erstes Steuermodul und ein - hierarchisch untergeordnetes - zweites Steuermodul aufweist. Das erste Steuermodul ist eingerichtet, um eine Lastanforderung zu erhalten, um von der mindestens einen ersten Leistungsbereitstellungsvorrichtung eine erste Leistungsbereitstellungsinformation zu ermitteln oder zu empfangen, um von dem zweiten Steuermodul eine zweite Leistungsbereitstellungsinformation zu empfangen, um auf der Grundlage der Lastanforderung, der ersten Leistungsbereitstellungsinformation und der zweiten Leistungsbereitstellungsinformation mittels nichtlinearer Optimierung eine erste Lastverteilung zu bestimmen, die eine erste Teillast für die mindestens eine erste Leistungsbereitstellungsvorrichtung und eine zweite Teillast für die Leistungsbereitstellungsgruppe umfasst, und um das Leistungsbereitstellungsnetzwerk mit der ersten Lastverteilung zu betreiben. Das zweite Steuermodul ist eingerichtet, um die zweite Teillast von dem ersten Steuermodul zu empfangen, um mittels gemischt-ganzzahliger linearer Optimierung eine zweite Lastverteilung zu bestimmen, durch die die zweite Teillast auf die zweiten Leistungsbereitstellungsvorrichtungen der Leistungsbereitstellungsgruppe aufgeteilt oder verteilt wird, und um die Leistungsbereitstellungsgruppe mit der zweiten Lastverteilung zu betreiben. In Zusammenhang mit der Steuervorrichtung ergeben sich insbesondere diejenigen Vorteile, die bereits in Zusammenhang mit dem Verfahren erläutert wurden.

Insbesondere ist die Steuervorrichtung eingerichtet zur Durchführung eines erfindungsgemäßen Verfahrens oder eines Verfahrens nach einer oder mehreren der zuvor beschriebenen Ausführungsformen.

In einer Ausführungsform ist das erste Steuermodul eingerichtet, um die Lastanforderung selbst zu ermitteln. Alternativ oder zusätzlich ist das erste Steuermodul eingerichtet, um die Lastanforderung, insbesondere von der Lastvorrichtung oder von dem Betreiber, zu empfangen.

Gemäß einer Weiterbildung der Erfindung ist vorgesehen, dass das erste Steuermodul eingerichtet ist, um mittels der nichtlinearen Optimierung eine auf der Grundlage der ersten und zweiten Leistungsbereitstellungsinformationen ermittelte erste Kostenfunktion, insbesondere die Gesamtkostenfunktion, zu optimieren und daraus die erste Lastverteilung zu erhalten.

Gemäß einer Weiterbildung der Erfindung ist vorgesehen, dass das zweite Steuermodul eingerichtet ist, um von den zweiten Leistungsbereitstellungsvorrichtungen der Leistungsbereitstellungsgruppe jeweils eine dritte Leistungsbereitstellungsinformation zu ermitteln oder zu empfangen, und um auf der Grundlage der dritten Leistungsbereitstellungsinformationen eine zweite Kostenfunktion, insbesondere die Teil-Kostenfunktion, zu ermitteln, und die zweite Lastverteilung durch gemischt-ganzzahlige lineare Optimierung der zweiten Kostenfunktion zu erhalten.

Insbesondere ist das zweite Steuermodul eingerichtet, um die zweite Leistungsbereitstellungsinformation auf der Grundlage der dritten Leistungsbereitstellungsinformationen zu ermitteln.

In einer Ausführungsform ist das erste Steuermodul eingerichtet, um die erste Lastverteilung ohne gegebenenfalls insbesondere von den dritten Leistungsbereitstellungsinformationen umfasste Informationen darüber, welche zweiten Leistungsbereitstellungsvorrichtungen momentan angeschaltet oder abgeschaltet sind, zu berechnen. Insbesondere ist zugleich das zweite Steuermodul eingerichtet, um die entsprechenden Informationen über den Schaltzustand der zweiten Leistungsbereitstellungsvorrichtungen nicht an das erste Steuermodul zu kommunizieren. Insbesondere ist das zweite Steuermodul eingerichtet, um die dritten Leistungsbereitstellungsinformationen nicht an das erste Steuermodul zu kommunizieren. Insoweit wird vorteilhaft folgerichtig eine vollständige hierarchische Trennung zwischen den Steuermodulen mit Bezug auf die übergeordnete nichtlineare Optimierung einerseits und die untergeordnete gemischt-ganzzahlige Optimierung andererseits umgesetzt.

Die Aufgabe wird schließlich auch gelöst, indem ein Leistungsbereitstellungsnetzwerk geschaffen wird, das mindestens eine erste Leistungsbereitstellungsvorrichtung und eine Leistungsbereitstellungsgruppe von zweiten Leistungsbereitstellungsvorrichtungen aufweist. Außerdem weist das Leistungsbereitstellungsnetzwerk eine erfindungsgemäße Steuervorrichtung oder eine Steuervorrichtung nach einer oder mehreren der zuvor beschriebenen Ausführungsformen auf. In Zusammenhang mit dem Leistungsbereitstellungsnetzwerk ergeben sich insbesondere diejenigen Vorteile, die zuvor bereits in Zusammenhang mit dem Verfahren oder der Steuervorrichtung erläutert wurden.

Gemäß einer Weiterbildung der Erfindung ist vorgesehen, dass die zweiten Leistungsbereitstellungsvorrichtungen jeweils eine Brennkraftmaschine und eine mit der Brennkraftmaschine antriebswirkverbundene elektrische Maschine zur Erzeugung elektrischer Leistung umfassen. Insbesondere sind somit die zweiten Leistungsbereitstellungsvorrichtungen als Generatorsätze oder Gensets ausgebildet.

Alternativ oder zusätzlich ist vorgesehen, dass die mindestens eine erste Leistungsbereitstellungsvorrichtung ausgewählt ist aus einer Gruppe, bestehend aus: Einer Windkraftanlage, einer Photovoltaikanlage, und einem elektrischen Energiespeicher, insbesondere einer Batterie oder einem Kondensator.

Gemäß einer Weiterbildung der Erfindung ist vorgesehen, dass das Leistungsbereitstellungsnetzwerk wenigstens eine Lastvorrichtung aufweist oder mit wenigstens einer Lastvorrichtung wirkverbunden ist. Die Steuervorrichtung, insbesondere das erste Steuermodul, ist insbesondere eingerichtet, um die Lastanforderung von der wenigstens einen Lastvorrichtung zu empfangen. Die Lastvorrichtung kann insbesondere eine lokale elektrische Last sein, beispielsweise das elektrische Netzwerk eines Schiffs, eines Hafens oder eines Krankenhauses oder einer Fabrik, oder einer anderen öffentlichen Einrichtung.

Insbesondere ist das Leistungsbereitstellungsnetzwerk in einer Ausführungsform ein sogenanntes Mikronetzwerk oder MicroGrid. Es ist aber möglich, dass das Leistungsbereitstellungsnetzwerk mit einem größeren, insbesondere überregionalen elektrischen Netzwerk, insbesondere einem überregionalen Stromnetz, elektrisch verbunden ist.

Insbesondere gehört zur Erfindung auch eine Leistungsanordnung, umfassend das Leistungsbereitstellungsnetzwerk und die mit dem Leistungsbereitstellungsnetzwerk wirkverbundene, insbesondere elektrisch verbundene Lastvorrichtung.

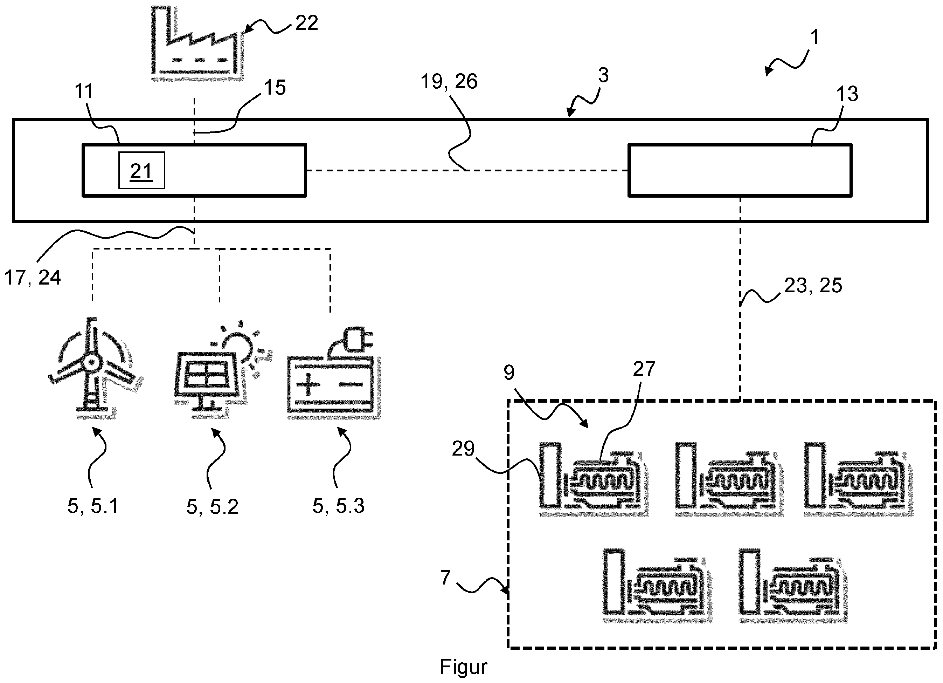

Die Erfindung wird im Folgenden anhand der Zeichnung näher erläutert. Dabei zeigt die einzige Figur eine schematische Darstellung eines Ausführungsbeispiels eines Leistungsbereitstellungsnetzwerks mit einem Ausführungsbeispiel einer Steuervorrichtung, sowie schematisch ein Ausführungsbeispiel eines Verfahrens zum Betreiben des Leistungsbereitstellungsnetzwerks.

Die einzige Fig. zeigt eine schematische Darstellung eines Ausführungsbeispiels eines Leistungsbereitstellungsnetzwerks 1 mit einem Ausführungsbeispiel einer Steuervorrichtung 3, sowie schematisch ein Ausführungsbeispiel eines Verfahrens zum Betreiben des Leistungsbereitstellungsnetzwerks 1.

Insbesondere kann das Leistungsbereitstellungsnetzwerk 1 ein sogenanntes Mikronetzwerk oder MicroGrid sein. Es ist möglich, dass das Leistungsbereitstellungsnetzwerk 1 mit einem größeren, insbesondere überregionalen elektrischen Netzwerk, insbesondere einem überregionalen Stromnetz, elektrisch verbunden ist.

Das Leistungsbereitstellungsnetzwerk 1 weist mindestens eine erste Leistungsbereitstellungsvorrichtung 5, vorzugsweise eine Mehrzahl erster Leistungsbereitstellungsvorrichtungen 5, eine Leistungsbereitstellungsgruppe 7 von zweiten Leistungsbereitstellungsvorrichtungen 9 und die Steuervorrichtung 3 auf. Es ist möglich, dass das Leistungsbereitstellungsnetzwerk 1 eine Mehrzahl an Leistungsbereitstellungsgruppen 7 aufweist.

Die Steuervorrichtung 3 weist ein erstes Steuermodul 11 und ein zweites Steuermodul 13 auf.

Das erste Steuermodul 11 ist eingerichtet, um eine Lastanforderung 15 zu erhalten, von der mindestens einen ersten Leistungsbereitstellungsvorrichtung 5 eine erste Leistungsbereitstellungsinformation 17 zu ermitteln oder zu empfangen, von dem zweiten Steuermodul 13 eine zweite Leistungsbereitstellungsinformation 19 zu empfangen, und um auf der Grundlage der Lastanforderung 15, der ersten Leistungsbereitstellungsinformation 17 und der zweiten Leistungsbereitstellungsinformation 19 mittels nichtlinearer Optimierung eine erste Lastverteilung 21 zu bestimmen, die eine erste Teillast 24 für die die mindestens eine erste Leistungsbereitstellungsvorrichtung 5 und eine zweite Teillast 26 für die Leistungsbereitstellungsgruppe 7 umfasst. Das erste Steuermodul 11 ist außerdem eingerichtet, um das Leistungsbereitstellungsnetzwerk 1 mit der ersten Lastverteilung 21 zu betreiben.

Insbesondere ist das erste Steuermodul 11 eingerichtet, um die Lastanforderung 15 zu ermitteln, oder um die Lastanforderung 15 insbesondere von einer mit dem Leistungsbereitstellungsnetzwerk 1 wirkverbundenen und durch das Leistungsbereitstellungsnetzwerk 1 mit Leistung versorgten Lastvorrichtung 22, oder von einem Betreiber des Leistungsbereitstellungsnetzwerks 1 oder der Lastvorrichtung 22 zu empfangen.

Die Lastvorrichtung 22 kann insbesondere eine lokale elektrische Last sein, beispielsweise das elektrische Netzwerk eines Schiffs, eines Hafens, einer Fabrik oder eines Krankenhauses, oder einer anderen öffentlichen Einrichtung.

Das zweite Steuermodul 13 ist eingerichtet, um die zweite Teillast 26 von dem ersten Steuermodul 11 zu empfangen, und mittels gemischt-ganzzahliger linearer Optimierung eine zweite Lastverteilung 23 zu bestimmen, durch die die zweite Teillast 26 auf die zweiten Leistungsbereitstellungsvorrichtungen 9 der Leistungsbereitstellungsgruppe 7 verteilt wird. Das zweite Steuermodul 13 ist außerdem eingerichtet, um die Leistungsbereitstellungsgruppe 7 mit der zweiten Lastverteilung 23 zu betreiben.

Insbesondere ist die Steuervorrichtung 3 eingerichtet zur Durchführung eines im Folgenden näher beschriebenen Verfahrens.

Insbesondere wird die Lastanforderung 15 - insbesondere vollständig - aufgeteilt auf die erste Teillast 24 und die zweite Teillast 26.

Vorzugsweise ist das erste Steuermodul 11 eingerichtet, um mittels der nichtlinearen Optimierung eine auf der Grundlage der ersten und zweiten Leistungsbereitstellungsinformationen 17, 19 ermittelte erste Kostenfunktion zu optimieren und daraus die erste Lastverteilung 21 zu erhalten.

Vorzugsweise ist das zweite Steuermodul 13 eingerichtet, um von den zweiten Leistungsbereitstellungsvorrichtungen 9 der Leistungsbereitstellungsgruppe 7 jeweils eine dritte Leistungsbereitstellungsinformation 25 zu ermitteln oder zu empfangen, und um auf der Grundlage der dritten Leistungsbereitstellungsinformationen eine zweite Kostenfunktion zu ermitteln, und die zweite Lastverteilung durch gemischt-ganzzahlige lineare Optimierung der zweiten Kostenfunktion zu erhalten. Insbesondere ist das zweite Steuermodul 13 eingerichtet, um die zweite Leistungsbereitstellungsinformation 19 auf der Grundlage der dritten Leistungsbereitstellungsinformationen 25 zu ermitteln.

Die erste Leistungsbereitstellungsinformation 17 umfasst insbesondere eine minimal bereitstellbare Leistung, eine maximal bereitstellbare Leistung, einen Mittelwert oder Erwartungswert einer bereitstellbaren Leistung, eine aktuell verfügbare Leistung, mit Blick auf die Leistungsbereitstellung bestehende Beschränkungen, eine Kosteninformation zu in Zusammenhang mit der bereitstellbaren Leistung entstehenden Kosten, und/oder eine Verfügbarkeit einer ersten Leistungsbereitstellungsvorrichtung 5. Insbesondere kann die erste Leistungsbereitstellungsinformation 17 von der Zeit abhängen und sich insbesondere auf einen Prognosezeitraum beziehen. Bevorzugt umfasst die erste Leistungsbereitstellungsinformation 17 eine Mehrzahl an Informationen oder Daten, wobei sie insbesondere als Informationsvektor ausgebildet ist. Bevorzugt umfasst die erste Leistungsbereitstellungsinformation 17 eine aktuell verfügbare, beispielsweise vom Wetter abhängige Leistung, insbesondere zeitabhängig, insbesondere bezogen auf den Prognosezeitraum.

Bevorzugt umfasst die zweite Leistungsbereitstellungsinformation 19 eine Mehrzahl an Informationen oder Daten, wobei sie insbesondere als Informationsvektor ausgebildet ist. Bevorzugt umfasst die zweite Leistungsbereitstellungsinformation 19 eine aktuell verfügbare Leistung und/oder einen aktuell zur Verfügung stehenden Leistungsgradient, sowie alternativ oder zusätzlich in Zusammenhang mit der Leistungsbereitstellung entstehende Kosten und/oder mit Blick auf die Leistungsbereitstellung bestehende Beschränkungen. Bevorzugt ist die zweite Leistungsbereitstellungsinformation 19 zeitabhängig gegeben, insbesondere bezogen auf den Prognosezeitraum.

Die dritten Leistungsbereitstellungsinformationen 25 umfassen bevorzugt jeweils eine Mehrzahl an Informationen oder Daten, wobei sie insbesondere als Informationsvektoren ausgebildet sind. Bevorzugt umfasst eine jeweilige dritte Leistungsbereitstellungsinformation 25 eine aktuell verfügbare Leistung und/oder einen aktuell zur Verfügung stehenden Leistungsgradient einer zugeordneten zweiten Leistungsbereitstellungsvorrichtung 9, sowie alternativ oder zusätzlich in Zusammenhang mit der Leistungsbereitstellung durch die zugeordnete zweite Leistungsbereitstellungsvorrichtung 9 entstehende Kosten und/oder mit Blick auf die zugeordnete zweite Leistungsbereitstellungsvorrichtung 9 bestehende Beschränkungen. Vorzugsweise umfasst die jeweilige dritte Leistungsbereitstellungsinformation 9 auch die Information, ob die zugeordnete zweite Leistungsbereitstellungsvorrichtung 9 momentan angeschaltet oder abgeschaltet ist, oder ob sie momentan angeschaltet oder abgeschaltet werden kann. Bevorzugt sind die dritten Leistungsbereitstellungsinformationen 25 zeitabhängig gegeben, insbesondere bezogen auf den Prognosezeitraum.

Insbesondere weisen die zweiten Leistungsbereitstellungsvorrichtungen 9 jeweils eine Brennkraftmaschine 27 und eine mit der Brennkraftmaschine 27 antriebswirkverbundene elektrische Maschine 29 zur Erzeugung elektrischer Leistung auf. Die mindestens eine erste Leistungsbereitstellungsvorrichtung 5 ist vorzugsweise ausgewählt ist aus einer Gruppe, bestehend aus: Einer Windkraftanlage 5.1, einer Photovoltaikanlage 5.2, und einem elektrischen Energiespeicher 5.3, insbesondere einer Batterie oder einem Kondensator.

Im Rahmen einer Ausführungsform eines Verfahrens zum Betreiben des Leistungsbereitstellungsnetzwerks 1 werden insbesondere die Lastanforderung 15, die erste Leistungsbereitstellungsinformation 17 und die zweite Leistungsbereitstellungsinformation 19 erfasst, und die erste Lastverteilung 21, umfassend die erste Teillast 24 und die zweite Teillast 26, wird auf der Grundlage der Lastanforderung 15, der ersten Leistungsbereitstellungsinformation 17 und der zweiten Leistungsbereitstellungsinformation 19 mittels nichtlinearer Optimierung bestimmt. Mittels gemischt-ganzzahliger linearer Optimierung wird die zweite Lastverteilung 23 bestimmt, durch die die zweite Teillast 26 auf die zweiten Leistungsbereitstellungsvorrichtungen 9 der Leistungsbereitstellungsgruppe 7 verteilt wird. Das Leistungsbereitstellungsnetzwerk 1 wird mit der ersten Lastverteilung 21 betrieben, und die Leistungsbereitstellungsgruppe 7 wird mit der zweiten Lastverteilung 23 betrieben.

Insbesondere wird die erste Lastverteilung 21 bestimmt, indem mittels der nichtlinearen Optimierung eine auf der Grundlage der ersten und zweiten Leistungsbereitstellungsinformationen 17, 19 ermittelte erste Kostenfunktion optimiert wird.

Für die zweiten Leistungsbereitstellungsvorrichtungen 9 der Leistungsbereitstellungsgruppe 7 wird insbesondere jeweils eine dritte Leistungsbereitstellungsinformation 25 erfasst, wobei auf der Grundlage der dritten Leistungsbereitstellungsinformationen 25 eine zweite Kostenfunktion ermittelt wird, und wobei die zweite Lastverteilung 23 bestimmt wird, indem die zweite Kostenfunktion mittels der gemischt-ganzzahligen linearen Optimierung optimiert wird. Die zweite Leistungsbereitstellungsinformation 19 wird insbesondere auf der Grundlage der dritten Leistungsbereitstellungsinformationen 25 ermittelt.

Als die zweiten Leistungsbereitstellungsvorrichtungen 9 werden insbesondere solche Leistungsbereitstellungsvorrichtungen 9 verwendet, die durch das Leistungsbereitstellungsnetzwerk 1 frei steuerbar sind. Als die mindestens eine erste Leistungsbereitstellungsvorrichtung 5 wird dagegen insbesondere eine solche Leistungsbereitstellungsvorrichtung 5 verwendet, deren momentane maximale Leistung von mindestens einer durch das Leistungsbereitstellungsnetzwerk 1 nicht oder wenig beeinflussbaren Bedingung abhängt, insbesondere die Windkraftanlage 5.1, die Photovoltaikanlage 5.2 und/oder der elektrische Energiespeicher 5.3.

## Patentansprüche

1. Verfahren zum Betreiben eines Leistungsbereitstellungsnetzwerks (1), das mindestens eine erste Leistungsbereitstellungsvorrichtung (5) und eine Leistungsbereitstellungsgruppe (7) von zweiten Leistungsbereitstellungsvorrichtungen (9) aufweist, wobei
- eine Lastanforderung (15) an das Leistungsbereitstellungsnetzwerk (1) erfasst wird, wobei
- eine erste Leistungsbereitstellungsinformation (17) von der mindestens einen ersten Leistungsbereitstellungsvorrichtung (5) und eine zweite Leistungsbereitstellungsinformation (19) von der Leistungsbereitstellungsgruppe (7) erfasst wird, wobei
- auf der Grundlage der Lastanforderung (15), der ersten Leistungsbereitstellungsinformation (17) und der zweiten Leistungsbereitstellungsinformation (19) mittels nichtlinearer Optimierung eine erste Lastverteilung (21) bestimmt wird, die eine erste Teillast (24) für die die mindestens eine erste Leistungsbereitstellungsvorrichtung (5) und eine zweite Teillast (26) für die Leistungsbereitstellungsgruppe (7) umfasst, wobei
- mittels gemischt-ganzzahliger linearer Optimierung eine zweite Lastverteilung (23) bestimmt wird, durch die die zweite Teillast (26) auf die zweiten Leistungsbereitstellungsvorrichtungen (9) der Leistungsbereitstellungsgruppe (7) aufgeteilt wird, wobei
- das Leistungsbereitstellungsnetzwerk (1) mit der ersten Lastverteilung (21) betrieben wird, und wobei die Leistungsbereitstellungsgruppe (7) mit der zweiten Lastverteilung (23) betrieben wird.

2. Verfahren nach Anspruch 1, wobei die erste Lastverteilung (21) bestimmt wird, indem mittels der nichtlinearen Optimierung eine auf der Grundlage der ersten und zweiten Leistungsbereitstellungsinformationen (17, 19) ermittelte erste Kostenfunktion optimiert wird.

3. Verfahren nach einem der vorhergehenden Ansprüche, wobei für die zweiten Leistungsbereitstellungsvorrichtungen (9) der Leistungsbereitstellungsgruppe (7) jeweils eine dritte Leistungsbereitstellungsinformation (25) erfasst wird, wobei auf der Grundlage der dritten Leistungsbereitstellungsinformationen (25) eine zweite Kostenfunktion ermittelt wird, und wobei die zweite Lastverteilung (23) bestimmt wird, indem die zweite Kostenfunktion mittels der gemischt-ganzzahligen linearen Optimierung optimiert wird.

4. Verfahren nach Anspruch 3, wobei die zweite Leistungsbereitstellungsinformation (19) auf der Grundlage der dritten Leistungsbereitstellungsinformationen (25) ermittelt wird.

5. Verfahren nach einem der vorhergehenden Ansprüche, wobei als die zweiten Leistungsbereitstellungsvorrichtungen (9) Leistungsbereitstellungsvorrichtungen (9) verwendet werden, die durch das Leistungsbereitstellungsnetzwerk (1) frei steuerbar sind, wobei als die mindestens eine erste Leistungsbereitstellungsvorrichtung (5) eine Leistungsbereitstellungsvorrichtung (5) verwendet wird, deren momentane maximale Leistung von mindestens einer durch das Leistungsbereitstellungsnetzwerk (1) nicht beeinflussbaren Bedingung abhängt.

6. Steuervorrichtung (3) zum Betreiben eines Leistungsbereitstellungsnetzwerks (1), das mindestens eine erste Leistungsbereitstellungsvorrichtung (5) und eine Leistungsbereitstellungsgruppe (7) von zweiten Leistungsbereitstellungsvorrichtungen (9) aufweist, wobei die Steuervorrichtung (3) ein erstes Steuermodul (11) und ein zweites Steuermodul (13) aufweist, wobei
- das erste Steuermodul (11) eingerichtet ist, um eine Lastanforderung (15) zu erhalten, um von der mindestens einen ersten Leistungsbereitstellungsvorrichtung (5) eine erste Leistungsbereitstellungsinformation (17) zu ermitteln oder zu empfangen, und von dem zweiten Steuermodul (13) eine zweite Leistungsbereitstellungsinformation (19) zu empfangen, und um auf der Grundlage der Lastanforderung (15), der ersten Leistungsbereitstellungsinformation (17) und der zweiten Leistungsbereitstellungsinformation (19) mittels nichtlinearer Optimierung eine erste Lastverteilung (21) zu bestimmen, die eine erste Teillast (24) für die mindestens eine erste Leistungsbereitstellungsvorrichtung (5) und eine zweite Teillast (26) für die Leistungsbereitstellungsgruppe (7) umfasst, und um das Leistungsbereitstellungsnetzwerk (1) mit der ersten Lastverteilung (21) zu betreiben, wobei
- das zweite Steuermodul (13) eingerichtet ist, um die zweite Teillast (26) von dem ersten Steuermodul (11) zu empfangen, und mittels gemischt-ganzzahliger linearer Optimierung eine zweite Lastverteilung (23) zu bestimmen, durch die die zweite Teillast (26) auf die zweiten Leistungsbereitstellungsvorrichtungen (9) der Leistungsbereitstellungsgruppe (7) aufgeteilt wird, und um die Leistungsbereitstellungsgruppe (7) mit der zweiten Lastverteilung (23) zu betreiben.

7. Steuervorrichtung (3) nach Anspruch 6, wobei das erste Steuermodul (11) eingerichtet ist, um mittels der nichtlinearen Optimierung eine auf der Grundlage der ersten und zweiten Leistungsbereitstellungsinformationen (17, 19) ermittelte erste Kostenfunktion zu optimieren und daraus die erste Lastverteilung (21) zu erhalten.

8. Steuervorrichtung (3) nach einem der Ansprüche 6 oder 7, wobei das zweite Steuermodul (13) eingerichtet ist, um von den zweiten Leistungsbereitstellungsvorrichtungen (9) der Leistungsbereitstellungsgruppe (7) jeweils eine dritte Leistungsbereitstellungsinformation (25) zu ermitteln oder zu empfangen, und um auf der Grundlage der dritten Leistungsbereitstellungsinformationen (25) eine zweite Kostenfunktion zu ermitteln, und die zweite Lastverteilung (23) durch gemischt-ganzzahlige lineare Optimierung der zweiten Kostenfunktion zu erhalten.

9. Leistungsbereitstellungsnetzwerk (1), mit mindestens einer ersten Leistungsbereitstellungsvorrichtung (5) und einer Leistungsbereitstellungsgruppe (7) von zweiten Leistungsbereitstellungsvorrichtungen (9), und mit einer Steuervorrichtung (3) nach einem der Ansprüche 6 bis 8.

10. Leistungsbereitstellungsnetzwerk (1) nach Anspruch 9, wobei
- die zweiten Leistungsbereitstellungsvorrichtungen (9) jeweils eine Brennkraftmaschine (27) und eine mit der Brennkraftmaschine (27) wirkverbundene elektrische Maschine (29) zur Erzeugung elektrischer Leistung umfassen, und/oder wobei
- die mindestens eine erste Leistungsbereitstellungsvorrichtung (5) ausgewählt ist aus einer Gruppe, bestehend aus: Einer Windkraftanlage (5.1), einer Photovoltaikanlage (5.2), und einem elektrischen Energiespeicher (5.3), insbesondere einer Batterie oder einem Kondensator.

11. Leistungsbereitstellungsnetzwerk (1) nach einem der Ansprüche 9 oder 10, mit wenigstens einer Lastvorrichtung (22), wobei die Steuervorrichtung (3) eingerichtet ist, die Lastanforderung (15) von der wenigstens einen Lastvorrichtung (22) zu empfangen.

## Claims

1. Method for operating a power supply network (1) comprising at least one first power supply device (5) and a power supply group (7) of second power supply devices (9), wherein
- a load demand (15) to the power supply network (1) is detected, wherein
- a first power supply information (17) of the at least one first power supply device (5) and a second power supply information (19) of the power supply group (7) are obtained, wherein
- based on the load demand (15), the first power supply information (17) and the second power supply information (19), a first load distribution (21) is determined by means of non-linear optimisation, which comprises a first partial load (24) for the at least one first power supply device (5) and a second partial load (26) for the power supply group (7), wherein
- a second load distribution (23) is determined by means of mixed-integer linear optimisation, by which the second partial load (26) is distributed between the second power supply devices (9) of the power supply group (7), wherein
- the power supply network (1) is operated with the first load distribution (21), and wherein the power supply group (7) is operated with the second load distribution (23).

2. Method according to claim 1, wherein the first load distribution (21) is determined in that a first cost function, derived based on the first and second power supply information (17, 19), is optimised by means of the non-linear optimisation.

3. Method according to any of the preceding claims, wherein, for the second power supply devices (9) of the power supply group (7), a respective third power supply information (25) is detected, wherein a second cost function is derived based on the third power supply information (25), and wherein the second load distribution (23) is determined in that the second cost function is optimised by means of the mixed-integer linear optimisation.

4. Method according to claim 3, wherein the second power supply information (19) is determined based on the third power supply information (25).

5. Method according to any of the preceding claims, wherein power supply devices (9) that can be freely controlled by the power supply network (1) are used as the second power supply devices (9), wherein a power supply device (5) whose instantaneous maximum power depends on at least one condition that cannot be influenced by the power supply network (1) is used as the at least one first power supply device (5).

6. Control device (3) for operating a power supply network (1) comprising at least one first power supply device (5) and a power supply group (7) of second power supply devices (9), wherein the control device (3) comprises a first control module (11) and a second control module (13), wherein
- the first control module (11) is configured to receive a load demand (15), to determine or receive a first power supply information (17) from the at least one first power supply device (5), and to receive a second a power supply information (19) from the second control module (13), and to determine, based on the load demand (15), the first power supply information (17) and the second power supply information (19), by means of non-linear optimisation a first load distribution (21) comprising a first partial load (24) for the at least one first power supply device (5) and a second partial load (26) for the power supply group (7), and to operate the power supply network (1) with the first load distribution (21), wherein
- the second control module (13) is configured to receive the second partial load (26) from the first control module (11), and to determine, by means of mixed-integer linear optimisation, a second load distribution (23) by which the second partial load (26) is distributed between the second power supply devices (9) of the power supply group (7), and to operate the power supply group (7) with the second load distribution (23).

7. Control device (3) according to claim 6, wherein the first control module (11) is configured to optimise, by means of the non-linear optimisation, a first cost function determined based on the first and second power supply information (17, 19) and to derive the first load distribution (21) therefrom.

8. Control device (3) according to any of claims 6 or 7, wherein the second control module (13) is configured to determine or receive a respective third power supply information (25) from the second power supply devices (9) of the power supply group (7), and to determine a second cost function based on the third power supply information (25), and to obtain the second load distribution (23) by means of mixed-integer linear optimisation of the second cost function.

9. Power supply network (1), comprising at least one first power supply device (5) and a power supply group (7) of second power supply devices (9), and comprising a control device (3) according to any of claims 6 to 8.

10. Power supply network (1) according to claim 9, wherein
- the second power supply devices (9) each comprise an internal combustion engine (27) and an electric machine (29) operatively connected to the internal combustion engine (27) for generating electrical power, and/or wherein
- the at least one first power supply device (5) is selected from a group consisting of: a wind power plant (5.1), a photovoltaic system (5.2), and an electrical energy storage device (5.3), in particular a battery or a capacitor.

11. Power supply network (1) according to any of claims 9 or 10, comprising at least one load device (22), wherein the control device (3) is configured to receive the load demand (15) from the at least one load device (22).

## Revendications

1. Procédé pour exploiter un réseau d'alimentation électrique (1), qui comprend au moins un premier dispositif d'alimentation électrique (5) et un groupe d'alimentation électrique (7) composé de deuxièmes dispositifs d'alimentation électrique (9), dans lequel
- une demande de charge (15) adressée au réseau d'alimentation électrique (1) est détectée, dans lequel
- une première information d'alimentation électrique (17) provenant de l'au moins un premier dispositif d'alimentation électrique (5) et une deuxième information d'alimentation électrique (19) provenant du groupe d'alimentation électrique (7) est enregistrée, dans lequel
- sur la base de la demande de charge (15), de la première information d'alimentation électrique (17) et de la deuxième information d'alimentation électrique (19), une première répartition de charge (21), qui comprend une première charge partielle (24) pour l'au moins un premier dispositif d'alimentation électrique (5) et une deuxième charge partielle (26) pour le groupe d'alimentation électrique (7), est déterminée au moyen d'une optimisation non linéaire, dans lequel
- une deuxième répartition de charge (23) est déterminée au moyen d'une optimisation linéaire mixte en nombres entiers, par laquelle la deuxième charge partielle (26) est répartie entre les deuxièmes dispositifs d'alimentation électrique (9) du groupe d'alimentation électrique (7), dans lequel
- le réseau d'alimentation électrique (1) est exploité avec la première répartition de charge (21), et le groupe d'alimentation électrique (7) est exploité avec la deuxième répartition de charge (23).

2. Procédé selon la revendication 1, dans lequel la première répartition de charge (21) est déterminée en optimisant une première fonction de coût déterminée sur la base des première et deuxième informations d'alimentation électrique (17, 19) au moyen de l'optimisation non linéaire.

3. Procédé selon l'une des revendications précédentes, dans lequel une troisième information d'alimentation électrique (25) respective est enregistrée pour les deuxièmes dispositifs d'alimentation électrique (9) du groupe d'alimentation électrique (7), dans lequel une deuxième fonction de coût est déterminée sur la base des troisièmes informations d'alimentation électrique (25), et dans lequel la deuxième répartition de charge (23) est déterminée par optimisation de la deuxième fonction de coût au moyen d'une optimisation linéaire mixte à nombres entiers.

4. Procédé selon la revendication 3, dans lequel la deuxième information d'alimentation électrique (19) est déterminée sur la base des troisièmes informations d'alimentation électrique (25).

5. Procédé selon l'une des revendications précédentes, dans lequel comme les deuxièmes dispositifs d'alimentation électrique (9) sont utilisés des dispositifs d'alimentation électrique (9) qui peuvent être commandés librement par le réseau d'alimentation électrique (1), dans lequel comme l'au moins un premier dispositif d'alimentation électrique (5) on utilise un dispositif d'alimentation électrique (5) dont la puissance maximale actuelle dépend d'au moins une condition qui ne peut pas être influencée par le réseau d'alimentation électrique (1).

6. Dispositif de commande (3) pour exploiter un réseau d'alimentation électrique (1), qui présente au moins un premier dispositif d'alimentation électrique (5) et un groupe d'alimentation électrique (7) de deuxièmes dispositifs d'alimentation électrique (9), le dispositif de commande (3) présentant un premier module de commande (11) et un deuxième module de commande (13), dans lequel
- le premier module de commande (11) est configuré pour recevoir une demande de charge (15), pour déterminer ou recevoir une première information d'alimentation électrique (17) provenant de l'au moins un premier dispositif d'alimentation électrique (5), et pour recevoir une deuxième information d'alimentation électrique (19) provenant du deuxième module de commande (13), et pour déterminer, sur la base de la demande de charge (15), de la première information d'alimentation électrique (17) et de la deuxième information d'alimentation électrique (19), une première répartition de charge (21), qui comprend une première charge partielle (24) pour l'au moins un premier dispositif d'alimentation électrique (5) et une deuxième charge partielle (26) pour le groupe d'alimentation électrique (7), au moyen d'une optimisation non linéaire, et pour exploiter le réseau d'alimentation électrique (1) avec la première répartition de charge (21), dans lequel
- le deuxième module de commande (13) est configuré pour recevoir la deuxième charge partielle (26) du premier module de commande (11), et pour déterminer une deuxième répartition de charge (23) au moyen d'une optimisation linéaire mixte à nombre entier, par laquelle la deuxième charge partielle (26) est répartie entre les deuxièmes dispositifs d'alimentation électrique (9) du groupe d'alimentation électrique (7), et pour exploiter le groupe d'alimentation électrique (7) avec la deuxième répartition de charge (23).

7. Dispositif de commande (3) selon la revendication 6, dans lequel le premier module de commande (11) est configuré pour optimiser, au moyen de l'optimisation non linéaire, une première fonction de coût déterminée sur la base des première et deuxième informations d'alimentation électrique (17, 19) et pour en obtenir la première répartition de charge (21).

8. Dispositif de commande (3) selon l'une des revendications 6 ou 7, dans lequel le deuxième module de commande (13) est configuré pour déterminer ou recevoir une troisième information d'alimentation électrique (25) respective provenant des deuxièmes dispositifs d'alimentation électrique (9) du groupe d'alimentation électrique (7), et pour déterminer une deuxième fonction de coût sur la base des troisièmes informations d'alimentation électrique (25), et pour obtenir la deuxième répartition de charge (23) par optimisation linéaire mixte en nombres entiers de la deuxième fonction de coût.

9. Réseau d'alimentation électrique (1), avec au moins un premier dispositif d'alimentation électrique (5) et un groupe d'alimentation électrique (7) de deuxièmes dispositifs d'alimentation électrique (9), ainsi qu'un dispositif de commande (3) selon l'une des revendications 6 à 8.

10. Réseau d'alimentation électrique (1) selon la revendication 9, dans lequel
- les deuxièmes dispositifs d'alimentation électrique (9) comprennent chacun un moteur à combustion interne (27) et une machine électrique (29) fonctionnellement connectée au moteur à combustion interne (27) pour générer de l'énergie électrique, et/ou dans lequel
- l'au moins un premier dispositif d'alimentation électrique (5) est choisi dans un groupe constitué d'une éolienne (5.1), d'un système photovoltaïque (5.2) et d'un accumulateur d'énergie électrique (5.3), en particulier d'une batterie ou d'un condensateur.

11. Réseau d'alimentation électrique (1) selon l'une des revendications 9 ou 10, avec au moins un dispositif de charge (22), dans lequel le dispositif de commande (3) est configuré pour recevoir la demande de charge (15) de l'au moins un dispositif de charge (22).
